# EUROPEAN PATENT APPLICATION

(11) **EP 4 725 831 A1**
(43) Date of publication of application: **15.04.2026**
(21) Application number: 24275108.9
(22) Date of filing: 14.10.2024
(51) Int. Cl.: B64C 3/56

(54) **FOLDABLE WING TIP ACTUATION SYSTEM**

(71) Applicant: Goodrich Actuation Systems Limited, Wolverhampton, West Midlands WV10 7EH (GB)
(72) Inventor: DERRY, John, Burton upon Trent, DE13 8DR (GB); DAVIES, Karl, Stourbridge, DY7 6NB (GB)
(74) Representative: Dehns

(57) **Abstract**

A foldable wing tip actuation system comprising: a plurality of actuators including: a wing tip actuator (10, 10') configured to move a wing tip (1, 1') relative to a fixed wing part (2, 2') of an aircraft about a hinge line (H, H') at which the wing tip is hingedly attached to the fixed wing part; one or more latch actuators (61, 62; 61', 62') configured to operate a latch mechanism for locking the wing tip against movement relative to the fixed wing part; and a common motor drive (20, 120) arranged to drive two or more of the plurality of actuators under control of a single motor control (30, 130).

## Description

### TECHNICAL FIELD

The present disclosure relates to an actuation system for a folding wing of an aircraft.

### BACKGROUND

Some aircraft are designed to have wings with folding portions e.g. folding tips. Generally, larger aircraft, with larger wing spans, that can carry more passengers are more fuel efficient. Further, aerodynamic drag is generally reduced with longer, narrower aircraft wings and, so, the more efficient the aircraft is in flight. Long wing spans, however, can present problems on the ground, for example where airport space e.g. at the gate or on the taxiway, is limited. Foldable wing systems have therefore been developed. The wings can be extended to their full span for flight, but the wing tips can be folded up (or down) relative to the fixed portion of the wing when space is limited. Locking and latching systems secure the wing tip in its extended position relative to the fixed wing part during flight. Such latching systems usually include a latch pins that are pushed through intermeshing lugs on the foldable and fixed wing parts by means of actuators. The wing parts are usually assembled such that spaced apart lugs along the edge of the foldable wing part that meets the fixed wing part fit between spaced apart lugs along the matching edge of the fixed wing part. The interlocking lugs together define a structural passage through which a latching pin is pushed by an actuator when the wings parts are to be fixed in the extended position. Different types of actuator may be used e.g. hydraulic, electromechanical or electrical actuators are used in aircraft to control moveable parts. Locking systems are known from e.g. EP 3 360 779 A1, EP 3 357 808 A1 and EP 2 604 514 A2.

Such foldable wing tips may only have a single latch, but typically, for load distribution on larger wings, have multiple latches along the hinge line of the wing each latch having a respective actuator and source of motive power. The foldable wing tip itself also has an actuator and drive motor to move the tip between the extended and the retracted position. Such systems, therefore, require at least two actuators and drives (for assemblies with one latch) and, typically, require three or more actuators and drives for each of the tip and each latch. Each motor drive will typically also require associated position sensors to accurately control motion of the respective actuators. Each of these components adds to the overall weight, envelope, cost, power consumption and complexity of the wing (and, therefore, the aircraft) and each is an additional potential point of failure, thus reducing reliability of the system. These factors are all particularly important in aircraft.

There is, therefore, a desire to provide a drive for a foldable wing tip actuation system that is sufficiently reliable but addresses the above problems of size, weight, cost, power consumption and complexity.

### SUMMARY

According to the present disclosure, there is provided a foldable wing tip actuation system comprising: a plurality of actuators including: a wing tip actuator configured to move a wing tip relative to a fixed wing part of an aircraft about a hinge line at which the wing tip is hingedly attached to the fixed wing part; one or more latch actuators configured to operate a latch mechanism for locking the wing tip against movement relative to the fixed wing part; and a common motor drive arranged to drive two or more of the plurality of actuators under control of a single motor control.

The common motor drive may be configured to selectively drive the wing tip actuator and one or more of the latch actuators. A gearbox may be provided between the common motor drive and the wing tip actuator and the one or more of the latch actuators, the gearbox being switchable between a first position connecting the motor to the wing tip actuator via a first output and a second position connecting the motor to the one or more of the latch actuators via a second output.

The gearbox may comprise a switch biased e.g. by a spring in the first position.

A drive means e.g. a solenoid may be provided to move the switch between the first and the second position.

In some examples, the system has two or more latch actuators, wherein the gearbox in the second position connects the motor to drive all of the two or more latch actuators. In embodiments, in the second position, the gearbox provides an output for each of the latch actuators. Alternatively, in the second position, the gearbox provides an output for a first of the latch actuators and the first latch actuator provides an output to drive a next of the latch actuators.

In other examples with two or more latch actuators, the common motor may be configured to drive both latch actuators, and a further motor may be arranged to drive the wing tip actuator.

In alternative implementations, the common motor directly drives a first of the latch actuators and the latch actuators are connected via a drive shaft, wherein operation of the first of the latch actuators by the motor causes the drive shaft to operate a next latch actuator.

The improvement provided by this system allows for a single motor drive and motor control to replace two or more sources of motive power and control used in the conventional system. In one example, two latch actuators are driven by a single, common motor drive and control instead of having separate motor drives and controls. The wing tip actuator could then still have its own motor drive and control. This results in some savings in cost, envelope, weight, complexity and power consumption. In another example, which has further benefits, by taking advantage of the fact that the latch actuators are never operable at the same time as the wing tip actuator, the assembly of the invention uses a common motor drive for the wing tip actuator and the latch actuator(s), thus further reducing overall cost, complexity, weight, size and power consumption of the drive assembly whilst maintaining functionality and reliability.

### DETAILED DESCRIPTION

Examples of the drive assembly will now be described with reference to the drawings. It should be noted that these are examples only and that variations are possible within the scope of the claims.

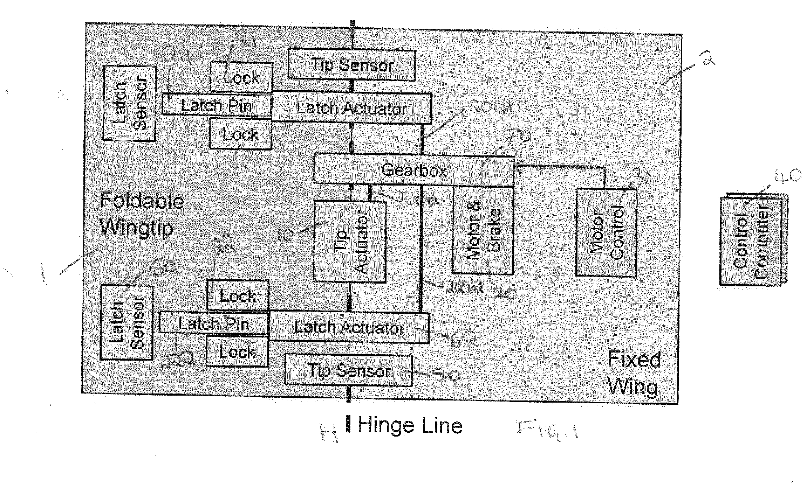

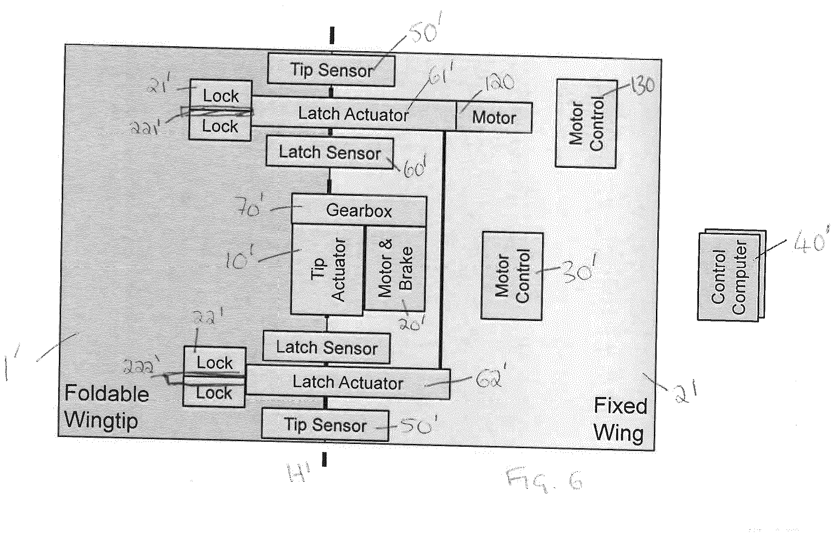

In the examples described, and shown in Figs. 1 to 5, a single, common motor drive and control is used for the latch actuator(s) and the wing tip actuator. As mentioned above, however, benefits are also provided even when only the latch actuators are driven by a common motor drive and the wing tip actuator has its own motor drive, as shown and described in relation to Fig. 6.
Figure 1 is a system diagram showing an example of a wing type actuation system according to the disclosure.
Figure 2A shows a 3D view of a system as shown in Fig. 1.
Figure 2B shows a more detailed 3D view of the hinge line of the system on Fig. 2B.
Figure 3 illustrates an operating sequence for retracting the wing tip.
Figure 4 illustrates an operating sequence for extending the wing tip.
Figure 5 is a diagram illustrating a gearbox of a system according to the disclosure.
Figure 6 is a system diagram of an alternative example of a system according to this disclosure.

As mentioned above, the system according to one example of this disclosure takes advantage of the fact that in a wing tip operating sequence, the wing tip extension/retraction operation can never occur simultaneously with the latching/unlatching operation. This allows a single motor drive system to operate both the wing tip folding and the latching, via a gearbox that can switch between drive outputs, as will be described in more detail below.

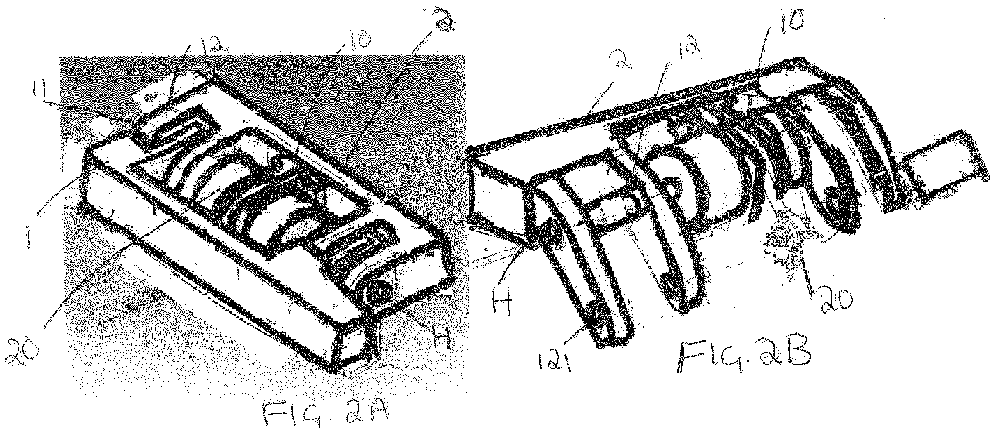

A system according to this disclosure is shown schematically in Fig. 1 and as a 3D view in Figs. 2A and 2B. Figs. 1 and 2A,2B illustrate a system having two latches, one on each side of the wing. This is just one example, and the principles described below are equally applicable to systems having a single latch or having two or more than two latches.

As is known, a foldable wing tip assembly includes a foldable wing tip 1 and a fixed wing part 2 to which the foldable tip is hingedly attached for the wing tip to be foldable relative to the fixed wing part about a hinge line H. Whilst various pivotal attachments between the wing tip and the fixed wing part are conceivable, in the example shown, each of the wing tip and the fixed wing part are provided with lugs 11, 12 that intermesh along the hinge line direction H as best seen in Fig. 2A. The lugs 11, 12 extend below the hinge line and are provided with holes 121 therethrough that align when the wing tip is in the opened out/extended state (i.e. for flight). In Fig. 2B, the holes 121 through the lugs 12 of the fixed wing part 2 are shown. The lugs 11 of the wing tip have corresponding holes that align with these holes when in the extended state shown in Fig. 2A. To latch the wing tip 1 relative to the fixed wing part 2 in the open state, latch pins 221, 222 are driven through the aligned holes of the lugs of the wing tip and the fixed wing part thus preventing relative rotation of the parts 1, 2. Locks, 21, 22 are then applied to prevent movement of the latch pins 221, 222.

Movement of the wing tip 1 between its retracted state and its extended state is performed by a wing tip actuator 10 which is drive by a motor drive 20 operably connected to the wing tip actuator 10. Operation of the motor 20 may be controlled by a motor control 30 e.g. motor control electronics. The control electronics may be operated by a control computer 40. The control computer 40 may be remote from the wing e.g. may be part of the flight control computer of the aircraft.

A position sensor 50 may be provided (here two tip position sensors 50 are provided, one on each side of the wing) to monitor the position of the tip as it extends/retracts to provide feedback to the motor control 30 and / or control computer 40.

A brake may also be provided (here integrated with the motor, but may, in other examples, be a separate unit) to brake the wing tip movement while the latches are being operated.

The latches are operated via latch actuators 61, 62 which cause movement of the latch pins 221, 222 (e.g. pins relative to holes in the lugs) between the latched and the unlatched positions. As mentioned above, in conventional arrangements, each of these actuators has its own motor drive and motor control. According to the present assembly, however, the latch actuators 61,62 are driven by the same motor drive 20, controlled by the same motor control 30, as the wing tip actuator 10. As mentioned above, the example shown as two latch actuators 61, 62 one on each side of the wing, but it is also feasible to have only one latch/actuator or more than two. As with the tip actuation, the latch actuation system may use latch position sensors 60 to determine the position of the latch pins 221, 222 to provide feedback to the control computer for monitoring and control.

A gearbox 70 is provided between the motor drive 20 and the tip and latch actuators 10, 61, 62 to selectively switch the output of the motor drive 20 between the tip actuator 10 and the latch actuators 61, 62 as required, and as described further below. In a first state, the gearbox 70 connects the motor 20 output 200a to the tip actuator 10. In a second state, the gearbox 70 connects the motor output 200b1, 200b2 to the latch actuators 61, 62.

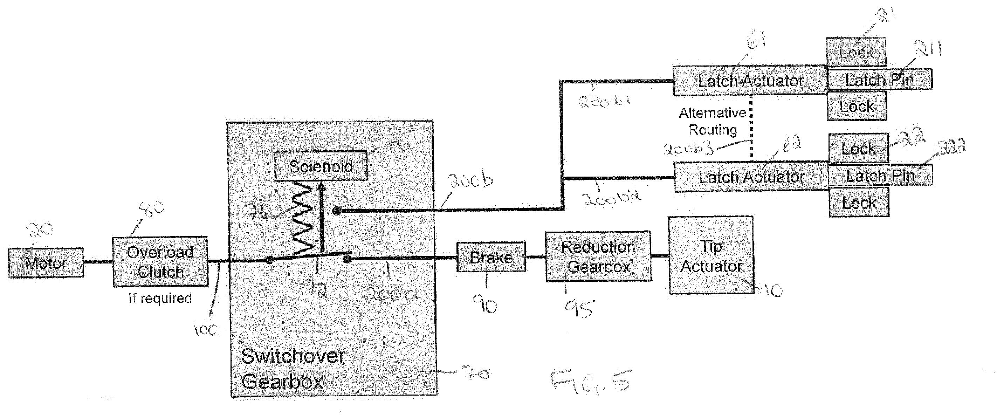

An example of the gearbox 70 is shown in more detail in Fig. 5. As described above with reference to Fig. 1, the single motor 20 is connected to selectively drive the tip actuator 10 via a first output 220 and the latch actuator(s) 61, 62 via a second output 200b, 200b1, 200b2.

To prevent overloading of the gearbox, an overload clutch 80 may be optionally provided e.g. between the motor 20 and the gearbox 70.

The brake (here 90) is, in this example, provided at the first output 200a between the gearbox 70 and the tip actuator 10. A reduction gearbox 95 may also be provided between the gearbox 70 and the tip actuator 10 to provide a stepped down output to the tip actuator 10.

The gearbox 70 may be provided as a switchover gearbox 70 having an input 100 from the output of the motor 20 and a switch 72 that, in a first position, connects the input to the first output 200a to the tip actuator 10 and, in a second position, connects the input 100 to the second output 200b. The second output 200b provides respective outputs 200b1, 200b2 to the latch actuator(s).

In the example shown, the switch 72 is biased to the first position and is driven to the second position when latching/unlatching operation is required. The switch 72 may be biased its default position (here the first position) by means of a spring 74 which pre-biases the switch to drive the tip actuator 10. The drive to move the switch 72 to the second position may be in the form of a solenoid 76 which, when energised, drives the switch against the bias of the spring 72.

In one example, the output from the gearbox 70, when driving the latch actuators, can be provided directly to each actuator in parallel (outputs 200b1, 200b2). Alternatively, the output may be provided to only one of the latch actuators (e.g. 200b1 to latch actuator 61) which then provides an output 200b3 to drive the other latch actuator 62.

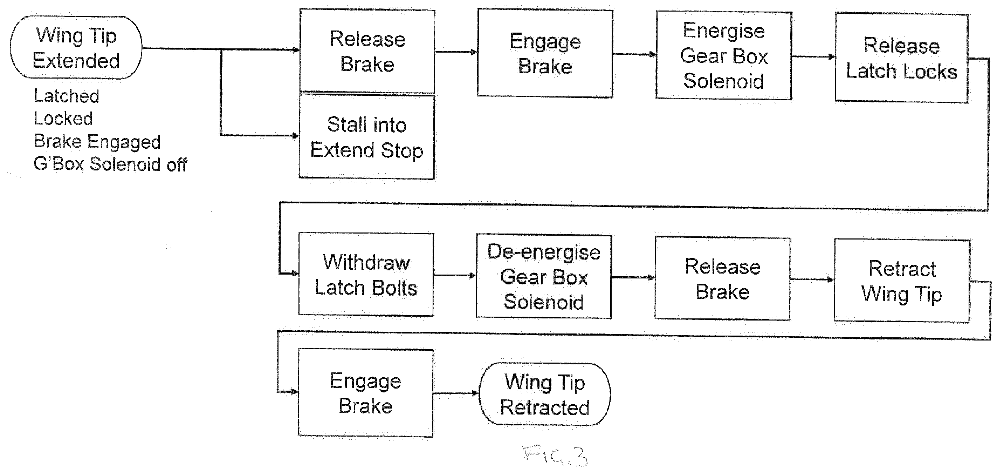

An example of the operating sequence to retract a wing tip 1 from the open position to the folded state is shown in Fig. 3. At the start of this sequence, the wing tip 1 is extended, with the latch pins engaged and locked. The brake 90 is engaged, in the power off condition. The gearbox 70 is in the first state where the switch 72 connects the input to the first output to the wing tip actuator 10 (which, in this example, means that the spring 74 pre-loads the switch to the first position and the solenoid 76 is off/de-energised). To retract the tip, the brake is first briefly released. At the same time, it is preferable to stall the drive motor into the extend position stop - i.e. the wing tip is held hard against the end stop to prevent movement of the tip which would make unlatching difficult due to misalignment of the holes in the lugs through which the latch pins pass. Stalling into the end stop ensures that the latch pins 221, 222 are unloaded and the brake will hold the wing tip in position while the unlatching is performed. The brake 95 is then engaged and the gearbox 70 is driven to switch to the second output 200b (in this example by energising the solenoid 74 to move the switch 72) thus connecting the motor 20 to the latch actuators 61,62. The latch locks 21, 22 are released to allow withdrawal of the latch pins. The motor 20 is then operated to withdraw the latch pins. Once the unlatching is completed, the gearbox 70 changes to the second output position - i.e. to connect the motor 20 to drive the tip actuator 10 via the first output 200a - in the example this is done by de-energising the solenoid so that the spring 72 returns the switch 72 to the first position. The brake 90 is released and the motor 20 drives the wing tip actuator 10 to fold up/retract the wing tip. The brake is then engaged when the tip is retracted to hold the tip in the retracted position.

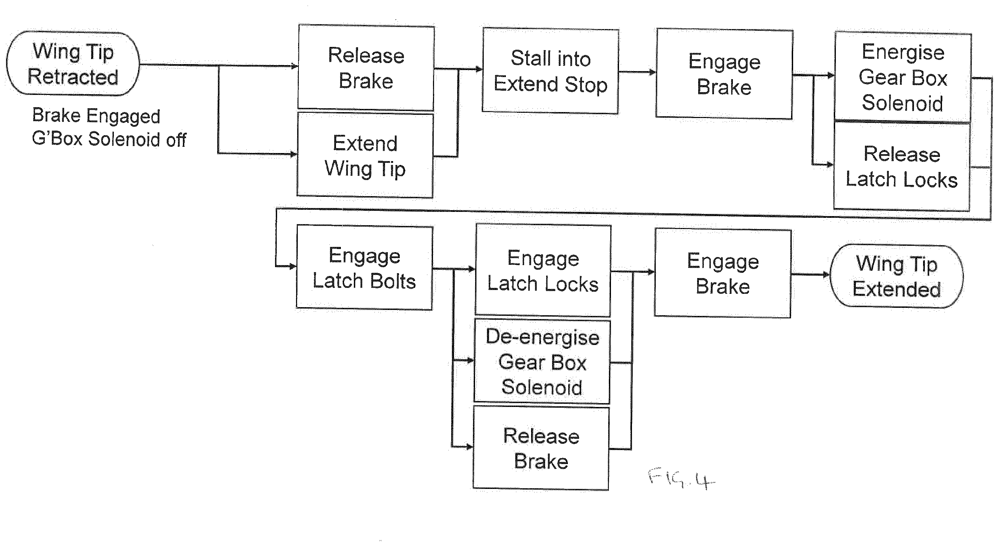

An example of the operating sequence to extend the wing tip 1 from the open position to the extended state is shown in Fig. 4.

At the start of the sequence, the wing tip 1 is in the retracted state, the brake is engaged and the gearbox is in the first state where the motor is connected to the wing tip actuator 10 through the gearbox (i.e., in the example, the solenoid 76 is off and the spring 74 biases the switch 72 to connect the input 100 to the first output 200a). To extend the wing tip, the brake is released and the motor operates via the gearbox to drive the wing tip actuator 10 to extend the wing tip about the hinge line relative to the fixed wing part. The brake may be released simultaneously with starting the motor and the wing tip is always under control. When the tip is extended, the motor is stalled to force the wing tip to the extend end stop i.e. to push the wing tip hard against the end stop so that the holes remain aligned even in a high vibrational environment. The brake is then engaged to hold the wing tip in position and the gearbox 70 is switched to its second state in which the motor is connected, via the gearbox, to the latch actuators 61,62 via the second output 200b. In the example shown, this is done by energising the solenoid 76 to act against the spring 74 to move the switch 72 to connect the input 100 to the second output 200b. The motor then drives the latch actuators to engage the latch pins (in the example, to drive the latch pins 221, 222 through the aligned holes of the lugs of the wing tip and fixed wing part to prevent relative rotation and so to secure (latch) the wing tip in the extended position relative to the wing fixed part. Once latched, the locks are engaged to prevent movement of the latch pins and the gearbox 70 can be returned to the default first position (here, by de-energizing the solenoid so that the spring returns the switch to connecting the input with the first output 200a while the brake is released and then re-engaged. The cycling of the brake releases any locked-in load due to structural deflection caused by stalling into the end stop. The wing tip is then in the secured extended position.

The switching function of the gearbox 70, described above, can be added to existing speed reduction gearboxes already used in wing tip actuation systems (such as the gearbox 70' in Fig. 6 described below). Whilst there is a cost associated with this modification, this is more than offset by the elimination of additional motors and drives on each latch actuator.

The example described above uses a common motor and motor control for the one or more latch actuators and the wing tip actuator.

The same principles can also be used to replace multiple latch actuator motors and control with a single motor drive and control, the wing tip actuator having its own motor drive and control. An example is shown in Fig. 6.

The parts of Fig. 6 corresponding to those in Fig. 1 use the same reference numerals supplemented with a '.

As in the example described above, Fig. 6 shows a foldable wing tip 1' and a fixed wing part 2' to which the foldable tip is hingedly attached for the wing tip to be foldable relative to the fixed wing part about a hinge line H'.

Movement of the wing tip 1" between its retracted state and its extended state is performed by a wing tip actuator 10 which is drive by a motor drive 20' operably connected to the wing tip actuator 10'. Operation of the motor 20' may be controlled by a motor control 30' e.g. motor control electronics. The control electronics may be operated by a control computer 40'. The control computer 40' may be remote from the wing e.g. may be part of the flight control computer of the aircraft.

A reduction gearbox 70' may be provided between the motor 20' and the wing tip actuator 10' to step down the motor output for the tip actuator according to the gear ratio of the reduction gearbox 70'.

A position sensor 50' may be provided (here two tip position sensors 50' are provided, one on each side of the wing) to monitor the position of the tip as it extends/retracts to provide feedback to the motor control 30' and control computer 40'.

A brake may also be provided (here integrated with the motor, but may, in other examples, be a separate unit) to brake the wing tip movement while the latches are being operated.

The latch pins 221', 222' are operated via latch actuators 61', 62' which cause movement of the latch pins (e.g. pins relative to holes in the lugs) between the latched and the unlatched positions. As mentioned above, in conventional arrangements, each of these actuators has its own motor drive and motor control. According to the present assembly, however, the latch actuators 61',62' are driven by the same motor drive 120, controlled by the same motor control 130. As with the tip actuation, the latch actuation system may use latch position sensors 60' to determine the position of the latch pins 221', 222' to provide feedback to the motor control for controlling the latch actuators.

In this example, the latch actuators 61', 62' are connected to each other by a drive shaft 140. When the motor 120 is controlled by the motor control 130 it drives a first of the latch actuators 61'. Operation of the first latch actuator 61' causes rotation of the drive shaft 140 which, being connected to the other latch actuator 62' causes corresponding operation of that actuator 62'.

In this example, the wing tip actuator 10' has its own motor and control. As mentioned above, however, the gearbox 70' can be modified to include switching between two outputs and could, therefore, allow the single motor as described above to selectively drive both the wing tip actuator 10' and the first latch actuator 61' which would then also drive the second latch actuator 62' via the drive shaft 140. This would correspond to the operation of the system shown in Fig. 1 using the output 200b3, described above.

The operating sequences for this alternative example would correspond to those described in relation to Figs. 3 and 4 except the steps of switching the gearbox 70 (energising/de-energising the gearbox solenoid) would be replaced by starting/stopping the latch actuator motor drive 120.

As mentioned above, position sensors may be used to detect the position of the actuators during operation to provide feedback to the control system. If latch position sensors are used, there is the possibility of using only a single position sensor in the example, described above, where operation of one actuator drives the other (via output 200b3 and/or in the second example shown in Fig. 6). This provides for further savings in cost, complexity, size and weight.

The wing tip actuation system according to this disclosure, therefore reduces the number of motor drives required, thus providing savings in cost, complexity, size, weight and power consumption.

## Claims

1. A foldable wing tip actuation system comprising:
a plurality of actuators including:
a wing tip actuator (10, 10') configured to move a wing tip (1, 1') relative to a fixed wing part (2, 2') of an aircraft about a hinge line (H, H') at which the wing tip is hingedly attached to the fixed wing part;
one or more latch actuators (61, 62; 61', 62') configured to operate a latch mechanism for locking the wing tip against movement relative to the fixed wing part; and
a common motor drive (20, 120) arranged to drive two or more of the plurality of actuators under control of a single motor control (30, 130).

2. The system of claim 1, wherein the common motor drive (20) is configured to selectively drive the wing tip actuator (10) and one or more of the latch actuators (61, 62).

3. The system of claim 2, comprising a gearbox (70) between the common motor drive and the wing tip actuator (10) and the one or more of the latch actuators (61, 62), the gearbox (70) being switchable between a first position connecting the motor (20) to the wing tip actuator(10) via a first output (200a) and a second position connecting the motor (20) to the one or more of the latch actuators (61, 62) via a second output (200b).

4. The system of claim 3, wherein the gearbox (70) comprises a switch (72) biased in the first position.

5. The system of claim 4, the gearbox (70) comprising a spring (74) arranged to bias the switch (72) in the first position.

6. The system of claim 3, 4 or 5, further comprising a drive means (76) to move the switch between the first and the second position.

7. The system of claim 6, wherein the drive means comprises a solenoid (76).

8. The system of any of claims 3 to 7, comprising two or more latch actuators, and wherein the gearbox (70) in the second position connects the motor (20) to drive all of the two or more latch actuators.

9. The system of claim 8, wherein, in the second position, the gearbox provides an output (200b1, 200b2) for each of the latch actuators.

10. The system of claim 8, wherein, in the second position, the gearbox (70) provides an output (200b1) for a first of the latch actuators (61) and the first latch actuator (61) provides an output (200b2) to drive a next of the latch actuators.

11. The system of claim 1, comprising two or more latch actuators (61', 62'),
wherein the common motor (120) is configured to drive both latch actuators, and further comprising a further motor (20') arranged to drive the wing tip actuator (10').

12. The system of claim 11, wherein the common motor (120) directly drives a first of the latch actuators (61') and wherein the latch actuators are connected via a drive shaft (140), wherein operation of the first of the latch actuators by the motor (120) causes the drive shaft (140) to operate a next latch actuator (62).

13. The system of any preceding claim, further comprising a motor brake (90).

14. The system of any preceding claim, further comprising a motor control (30, 130) for controlling operation of the common motor.

15. The system of any preceding claim, further comprising position sensors (50, 50', 60, 60') for one or more of the plurality of actuators to provide positional information to control the motor.
